# EUROPÄISCHE PATENTANMELDUNG

(11) **EP 3 418 467 A1**
(43) Veröffentlichungstag der Anmeldung: **26.12.2018**
(21) Anmeldenummer: 17001030.0
(22) Anmeldetag: 20.06.2017
(51) Int. Cl.: E04D 7/00, H02S 20/23

(54) **DACHBESCHICHTUNG ZUR VERSIEGELUNG UND STROMERZEUGUNG**

(71) Anmelder: Herbst, Martin, 5090 Lofer (AT)
(72) Erfinder: Herbst, Martin, 5090 Lofer (AT)

(57) **Zusammenfassung**

Die Erfindung besteht aus einer Dachbeschichtung, in welche elektronische Elemente eingearbeitet werden, sodass damit Strom erzeugt werden kann.

## Beschreibung

Die Erfindung besteht aus einer Dachbeschichtung, in welche elektronische Elemente eingearbeitet werden, sodass damit Strom erzeugt werden kann.

Die Basis besteht aus Silikonkautschuk mit einer Dehnfähigkeit von über 800%. Darauf wird zuoberst eine Schicht aus Silizium oder Galliumarsenid aufgetragen. In diese Schicht werden Anoden und Kathoden eingebettet, wodurch sich eine Solarfläche über den gesamten Dachbereich ergibt. Mithilfe dieser Bestandteile wird bei Sonnenbestrahlung Strom erzeugt.

Über der Siliziumschicht befindet sich die nanobiotische Schicht, welche aufgrund ihrer Nanomikrostruktur eine Anhaftung von Schmutz, Staub, Wasser, Regen, Schnee verhindert, wodurch der Aufbau Allwettertauglichkeit besitzt und eine Gesamtsolarfläche ohne Rücksicht auf Gebäudegegebenheiten, Denkmalschutz bzw. Dachgrundfläche möglich ist.

Die nanobiotische Schicht kann auch auf ein sogenanntes "Nur-Dach" aufgebracht werden, da sie mit einem hohen Faktor dampfdiffusiv (Dampf nur in einer Richtung durchlassend) aufgebracht werden kann. Sie haftet auf jedem Dachmaterial (Holz, Blech, Folie, Glas), zudem kann die Beschichtung farblos oder in diversen Farben ausgestaltet sein

Die Anoden und Kathoden werden in Abständen von 1-10cm in rechtwinkeligem Muster verlegt, Übergänge werden dabei entsprechend isoliert. Der erzeugte Strom wird dann über Kabel an Energieverbraucher oder Akkus geleitet oder der Strom wird ins Netz eingespeist.

Eine Dachbeschichtung aus Silikonkautschuk ist Stand der Technik. Neu ist die Einarbeitung von elektrisch leitenden Elementen direkt in die Schicht Silikonkautschuk. Im Vergleich zu herkömmlichen Solarstromanlagen ist die Kostenersparnis und längere Haltbarkeit aufgrund der verwendeten Materialien.

## Patentansprüche

1. Eine Nano-Beschichtung für Dächer, die Schmutz, Staub, Wasser, Regen, Schnee abweisend ist.

2. Eine Beschichtung nach Anspruch 1, unter der eine Schicht aus Silizium oder Galliumarsenid aufgebracht wird, in die elektrisch leitende Elemente eingebettet werden, mit denen Strom erzeugt werden kann.
